# EUROPEAN PATENT APPLICATION

(11) **EP 0 724 337 A2**
(43) Date of publication of application: **31.07.1996**
(21) Application number: 96300513.7
(22) Date of filing: 25.01.1996
(51) Int. Cl.: H04B 1/52

(54) **Mast head amplifier**

(30) Priority: 26.01.1995 GB 9501570
(71) Applicant: Airtech Limited, Aylesbury, Buckinghamshire HP19 3DE (GB)
(72) Inventor: Mellor, Simon, c/o Airtech Limited, Aylesbury, Buckinghamshire HP19 3DE (GB); Hill, Alexander, S-1825 Akersberg (SE)
(74) Representative: Style, Kelda Camilla Karen

(57) **Abstract**

A mast head telecommunication device (30) passes transmit signals from a base station to an antenna and passes received signals from the antenna to the base station. The transmit signal are in a first frequency band and the received signals are in a second different, frequency band. The mast head device has a hybrid (46). The first port (b) receives the transmit signals and the second port (a) receives the receive signals. Frequency selected means (48a, 48b) are connected to other ports (c,d) of the hydrid (46) and operable to pass therethrough signals received from the hybrid (46) having a frequency in the second band and to reflect signals received from the hybrid (46) that has a frequency in the first band.

## Description

The present invention relates to a telecommunication mast head device and in particular but not exclusively to mast head amplifiers for use with base stations of a mobile telecommunications cellular network, and to a method of passing transmit signals from a base station to an antenna and for passing receive signals from the antenna to the base station.

In simple terms, cellular networks generally comprise a number of cells, each cell of which has a base station. Each base station has an antenna which can transmit signals Tx from the base station to telephones or the like in a respective cell. Signals Rx transmitted by telephones or the like in the respective cell are received by the antenna and fed for processing to the base station. In this way communication to and from mobile telephones is possible. It will be appreciated that communication can be to and from data modems or the like as well as mobile telephones.

Several different standards for these type of cellular networks have been established. Some examples of these established standards are GSM, DCS 1800 (PCN) and PCS (1900).

The signals Tx transmitted by the antenna are generally much stronger than the signals Rx received by an antenna. Accordingly it is necessary to amplify the received signals Rx in order to process them. It has been proposed that the amplifier for the received signals be placed at the mast head for the antenna. An antenna is generally arranged at the top or head of a mast. By placing the amplifier at the mast head, it can be ensured that the distance between the amplifier and the antenna is reduced to a minimum. Thus the length of cable between the amplifier and antenna is minimized. If the amplifier were to be located in the base station, the received signal would suffer further losses before being amplified, thus reducing base station sensitivity. This may result in the unnecessary degradation of the noise figure of the system. This would result from losses caused by the received signal Rx passing from the antenna to the base station. By placing the amplifier at the mast head, these further losses and consequential detrimental effect on the system noise level, before amplification, are avoided.

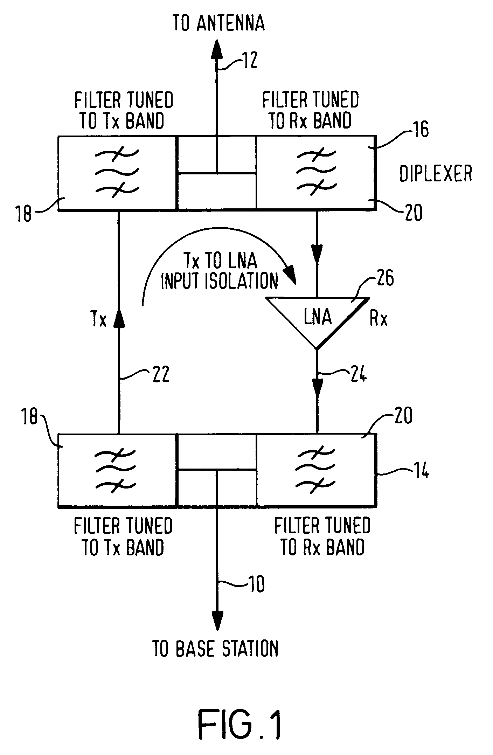

One known arrangement for a mast head amplifier is shown in Figure 1 of the accompanying drawings. This mast head amplifier has common feeds 10 and 12 to the base station and antenna respectively. These common feeds comprise coaxial cable which allow the transmitted Tx and received Rx signals to be carried on a single cable.

The mast head amplifier also has two diplexers or duplexers 14 and 16.A duplexer is functionally equivalent to a diplexer. However, with diplexers, the various elements are integrated into a single device whilst duplexers are made up of discreet elements. The embodiment shown in Figure 1 makes use of diplexers. Each diplexer 14 and 16 has two filters 18 and 20, one of which is tuned to the frequency of the transmit band whilst the other is tuned to the frequency of the receive band. It will be appreciated that the frequency band for the transmit signals Tx is different from that for the receive signals Rx.

The transmit filters 18 of the two diplexers are connected together via line 22 whilst the receive filters 20 of the two diplexers are connected together via line 24. A low noise amplifier (LNA) 26 is arranged on line 24 between the two receive filters 20.

The operation of this mast head amplifier will now be described. Firstly consider a transmit signal Tx being passed from the base station to the antenna. The transmit signal is passed via common feed 10 to the first diplexer 14. The transmit signal Tx passes through the transmit filter 18, being unable to pass through the receive filter 20. The transmit signal Tx then passes through line 22, through the transmit filter 18 of the second diplexer 16 and out of the second diplexer via common feed 12. The transmit signal Tx then passes to the antenna.

A receive signal Rx fed from the antenna to the base station will now be considered. The receive signal passes via common feed 12 to the receive filter 20 of the second diplexer 16. The receive signal passes through the receive filter 20, being unable to pass through the transmit filter 18, and is fed via line 24 to the low noise amplifier 26 where it is amplified. The amplified receive signal then passes through the receive filter 20 of first diplexer 14 to the common feed 10 via which it passes to the base station for processing.

However this known arrangement has several problems. Firstly the transmit signal Tx loses power as it passes through the transmit filters. This is disadvantageous in that either the transmit power has to be increased in order to get good cell coverage or the signal quality will be poor in the edge regions of the cell. This may in certain circumstances mean that the cell sizes have to be reduced in order to obtain the desired signal quality in all parts of the cell.

Additionally, there should be isolation of the transmit Tx and receive Rx signals. If there is insufficient isolation of the signals, the transmit signals may be passed through the low noise amplifier for the receive signals. As the power levels of the transmit Tx and receive Rx signals are quite different, the transmit signals Tx which have a higher power level could desensitize or overload the low noise amplifier by for example driving the amplifier into saturation, with the result that the desired amplification of the receive signals Rx would no longer be achieved. In order to achieve the necessary isolation of the transmit Tx and receive Rx signals, it is necessary to use relatively high order filters, i.e. filters with a relatively large number of resonators.

According to a first aspect of the present invention, there is provided a mast head telecommunication device for passing transmit signals from a base station to an antenna and for passing receive signals from the antenna to the base station, said transmit signals being in a first frequency band and said receive signals being in a second different frequency band, said mast head device comprising an arrangement having:
a hybrid, a first port of which receives the transmit signals and a second port of which receives the receive signals; and
frequency selective means connected to other ports of said hybrid and operable to pass therethrough signals received from the hybrid having a frequency in the said second band and to reflect signals received from the hybrid that have a frequency in the said first band.

With this arrangement, the transmit signals need not pass through any frequency selective means such as filters and are instead reflected by the frequency selective means which is arranged to allow the receive signals to pass therethrough. As discussed above, the known arrangement suffers from the disadvantage that the transmit signals lose power as the signals pass through the two filters tuned to the transmit frequency. Embodiments of the present invention are able to overcome this disadvantage and thus reduce the power losses suffered by the transmit signal.

In one embodiment of the present invention the power losses in the transmit signal can be reduced by approximately 66% as compared to the losses suffered by the known arrangement. This reduction in power loss results in several advantages. The power level of the transmit signal at the antenna can be maximised. Clear reception of the transmitted signal can be achieved in all parts of the cell, even the periphery thereof. Additionally, it may even be possible to increase the cell size without having to increase the power of the transmit signal, as compared with the known arrangement.

Additionally embodiments of the present invention may be able to achieve good isolation between the transmit and receive signals. This results from the combination of the hybrid and frequency selective means, for example filters.
This good isolation can be achieved with lower order filters as compared to the prior art. For example, the filter used in embodiments of the present invention may be provided with fewer resonators as compared with the known arrangements and in one arrangement with 30% less resonators. Thus embodiments of the present invention may be cheaper to implement than those of the prior art. Additionally, the use of fewer parts may improve the noise figure of the mast head amplifier as a whole and also may reduce losses in the receive and transmit signals. Also, if losses in the receive signal are reduced, a less powerful and hence cheaper low noise amplifier may be used.

Another advantage of embodiments of the present invention is that high power handling of the transmit signal can be achieved easily. With the known arrangement, the power handling capacity for the transmit signals is limited by the power handling capacity of the filters tuned to the transmit signals. This is because the hybrids are able to have an inherently high power handling capacity.

Yet another advantage of embodiments of the present invention is that the number and scale of intermodulation products from the transmit signal are reduced. Intermodulation products are generated within the filter in the prior art arrangement by transmit signals. As the transmit signals are reflected by the frequency selective means such as a filter, in embodiments of the present invention, and do not pass therethrough, the number of intermodulation products produced are reduced.

Preferably, in the arrangement, said second port of the hybrid is connected to the antenna and the reflected transmit signals are reflected to said second port.

It is preferred that the arrangement further comprise a second hybrid connected to an output of the frequency selective means, said first hybrid being connected to an input of the frequency selective means.

The first and second hybrids may be such that the receive signals received at said second port of the first hybrid are passed to a first, single, port of said second hybrid. This has the advantage that substantially all of the received signal is conveyed to a single output port (the first port) of the second hybrid less any losses suffered as a result of passing through the various components.

Preferably the arrangement further comprises a low noise amplifier and the first port of said second hybrid is connected to an input of the low noise amplifier to amplify the receive signal. As discussed previously, the arrangement including the amplifier is preferably at the mast head and thus the received signal does not suffer unnecessary losses before amplification.

Preferably, any transmit signals passing through said frequency selective means are passed to a second port of said second hybrid and a load is connected to said second port whereby the power of any transmit signal passed through the frequency selective means is attenuated and/or dissipated by said load. Whilst most of the transmit signal will usually be reflected by the frequency selective means, some transmit signals may pass through the frequency selective means. However, the presence of the load means that any transmit signals can be dissipated or attenuated in that load and not in the low noise amplifier. If reflected by the load, thetransmit signals will be sufficiently attenuated by the time that they reach the amplifier that they will not adversely affect it. As discussed previously, if transmit signals were to be passed directly to the low noise amplifier, desensitization or overloading of the amplifier could occur. Thus, an effective isolation of the receive and transmit signals can be achieved without the need to use higher order filters as in the prior art.

Hybrids are also known in the art as 3dB couplers or half power couplers. The hybrids used in embodiments of the present invention preferably have a coaxial construction. Preferably, the dielectric used will be air whilst the conducting material is copper plate. However, any other suitable dielectirc material can be used. Likewise any other suitable conducting material can be used. The hybrids will comprise four ports and a signal fed from a single port emerges from two opposite ports, adjacent to one another, with a phase shift of 90^{o} therebetween. This is advantageous in that with the use of two hybrids the receive signal can be passed to a single first output port of the second hybrid, cancellation of the received signal occurring at another output port. Likewise, any stray transmit signals may be passed to said second output port to be dissipated or attenuated in a load and not passed directly to the low noise amplifier which is connected to the first port.

The frequency selective means may comprise a band pass filter and may be in the form of two filters with the input of one filter being connected to a first of the other ports of the first hybrid and the input of a second filter being connected to a second of the other ports of the first hybrid. The said first and second ports of the first hybrid may be adjacent.

Preferably the frequency selective means are connected directly to the respective output ports of the first hybrid by a direct feed, without any connectors. The direct feed may take the form of a coaxial wire or cable, one end region of which is connected directly to the respective port of the hybrid andthe other end of which is directly connected to the frequency selective means or filter. In the context of this specification, directly connected means that there is no additional connecting element between the direct feed and the component in question at the connection region. This is to avoid further losses in power of the transmit signal as it is reflected. The transmit signal may otherwise lose power via unnecessary connectors and cabling. Additionally, power losses in the reflect Rx signal can likewise also be reduced. In order to achieve the direct connection, it is preferred that the first hybrid and frequency selective means be formed as an integral device or with the first hybrid and frequency selective means closely adjacent. In this way, a minimum length of connection betwen the frequency selective means and the first hybrid is possible. It will be appreciated that direct connection between the second hybrid and the frequency selective means also reduces power losses in the receive signal which is also advantageous. Accordingly, the second hybrid may also form part of the integrated device or be mounted closely adjacent to the frequency selective means.

In a preferred embodiment of the present invention, a mast head device comprises two of the arrangements as previously described. With such a device, the transmit signal may be received at said one port of said first hybrid of said second arrangement, reflected by said frequency selective means to said second port of said first hybrid of the second arrangement, passed to said first port of the first hybrid of the first arrangement, reflected by the frequency selective means and output at said second port of said first hybrid of the first arrangement and passed to said antenna.

Preferably an amplifier, frequency selective means and/or means for detecting the presence of the antenna are provided between the second port of the first hybrid of the second arrangement and the first port of the first hybrid of the first arrangement. The antenna detection means may comprise a VSWR meter (voltage source wave ratio meter) which checks for reflected power from the antenna. If the reflected power exceeds a predetermined value, it can be determined that the antenna is not longer present.

Preferably the received signals from the antenna are input to said second port of said first hybrid of said first arrangement and output at said first port of said second hybrid of the first arrangement, said received signal then being received at a port of said second hybrid of said second arrangement and being passed to said first port of the first hybrid of the second arrangement.

It is preferred that a low noise amplifier is provided between the output of the first arrangement and the input port of the second hybrid of the second arrangement for the received signals.

The above described arrangements have the advantage that a common feed can be used to provide the receive Rx and transmit Tx signals to and from the base station and antenna respectively. Of course in some embodiments of the present invention, a single filtering arrangement such as described previously can be provided. In that arrangement, separate feed cables would be provided for the transmit and receive signals. In particular, the receive signal output by the second hybrid would be amplified by the low noise amplifier and then carried via a cable to the base station for further processing. Likewise, the transmit signal would be fed from the base station to the input of the first hybrid of the arrangement where it is reflected by the frequency selective means and then passed via a common feed to the antenna.

According to a second aspect of the present invention, there is provided a method of passing transmit signals from a base station to an antenna and for passing receive signals from the antenna to the base station, said transmit signals being in a first frequency band and said receive signals being in a second different frequency band, said method comprising the steps of:
inputting transmit signals to a first port of a hybrid;
inputting receive signals to a second port of said hybrid;
passing signals having a frequency in said second band, received from said hybrid, through frequency selective means; and
reflecting signals having a frequency in said first band, received from said hybrid, from said frequency selective means.

For a better understanding of the present invention and as to how the same may be carried into effect, reference will now be made by way of example to the accompanying drawings in which:
Figure 1 shows a known mast head amplifier;
Figure 2 shows a mast head amplifier embodying the present invention;
Figure 3 shows part of the mast head amplifier of Figure 2;
Figures 4 and 5 shows a first arrangement of the first embodiment;
Figure 6 shows a cross-section through a second arrangement of the first embodiment;
Figure 7 shows a second mast head amplifier embodying the present invention; and
Figure 8 shows a cross-section through a hybrid illustrated in Figure 4.

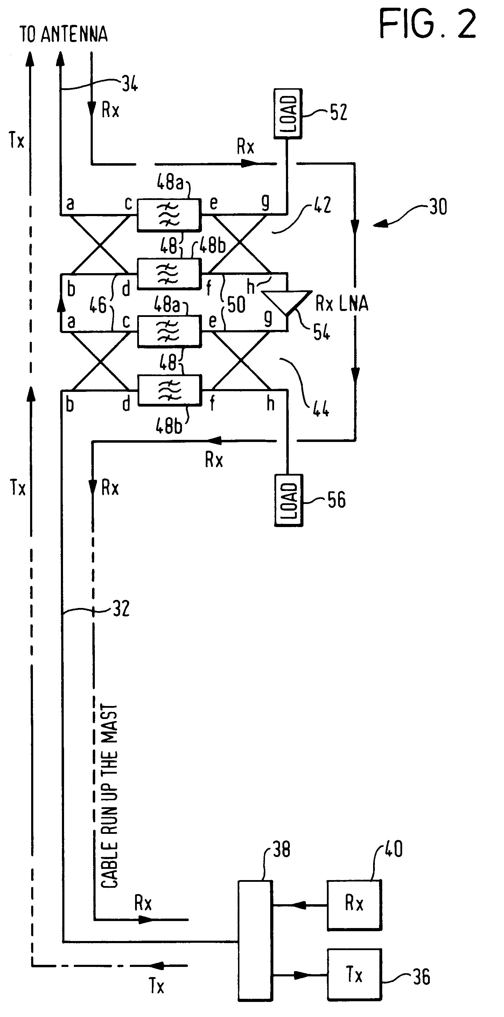

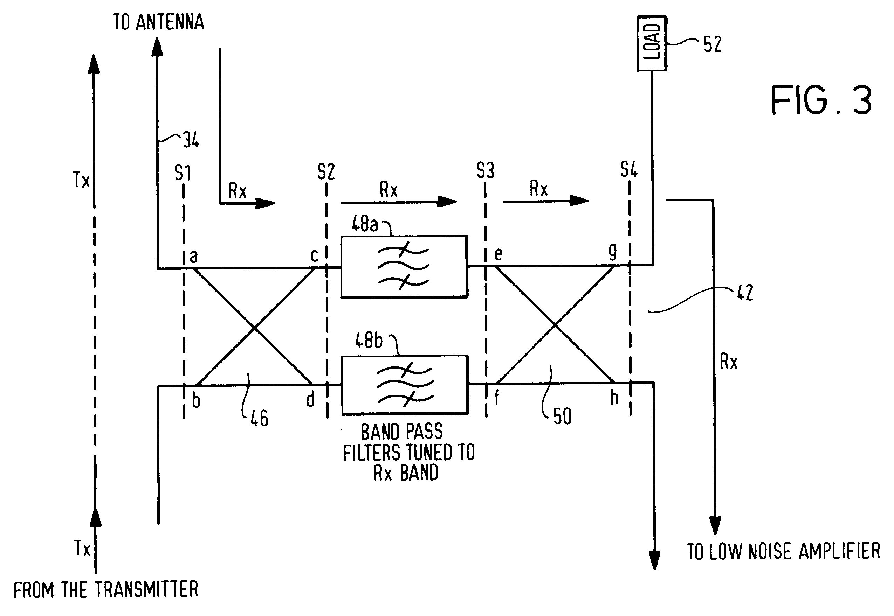

Reference will now be made to Figures 2 and 3 of the drawings.

The mast head amplifier 30 comprises two common feeds 32 and 34 from the base station to the mast head amplifier and from the mast head amplifier to the antenna respectively. The common feeds 32 and 34 comprise coaxial cable. The transmit signals Tx are passed in the base station from the transmit signal generator 36 via a diplexer 36 to common feed 32. In contrast the receive signals Rx are passed from the common feed 32 via diplexer 36 to the receive signal processor 40. The diplexer 38 may have the same construction as the diplexer described in relation to Figure 1 or may be in the form of a duplexer.

The mast head amplifier 30 has two arrangements 42 and 44 which are the same and which will hereinafter be referred to as the first and second parts 42 and 44 respectively. Eachpart 42 and 44 comprises a first hybrid 46, two band pass filters 48 and a second hybrid 50.

Each hybrid 46 and 50 has four ports, a to d and e to g respectively. All four of the hybrids are coaxial hybrids. The hybrids 46 and 48 also all have the property that a signal fed into any port splits and emerges from two opposite ports, which are adjacent with a phase shift of 90^{o} between the two emerging signals.

The band pass filters 48 are tuned to the frequency range of the receive signals. It will of course be appreciated that the transmit signals will fall into a first frequency band whilst the receive signals will fall into a second different frequency band, there being no overlap between the twofrequency bands. The frequencies of the respective band will depend on the cellular network used. For example for a European based PCN network the receive signal frequency band may be 1710-1785 MHz whilst the transmit frequency band may be 1805-1880 MHz.

The first band pass filter 48a is connected between port c of the first hybrid 46 and port e of the second hybrid 48 whilst the second band pass filter 48b is connected between port d of the first hybrid 46 and port f of the second hybrid 50. It should be noted that ports c and d of the first hybrid are adjacent to one another as are ports e and f of the second hybrid 50.

Port a of the first hybrid 46 of the first part 42 is connected to the antenna via common line 34. Port b of the first hybrid 46 of the first part 42 is connected to port a of the first hybrid of the second part 44. Port b of the first hybrid 46 of the second part 44 is connected to the base station via common feed 32.

Port g of the second hybrid 50 of the first part 42 is connected to a load 52 whilst port h of that part 42 is connected via a low noise amplifier 54 to port g of the second hybrid 50 of the second part 44. Finally port h of the second hybrid 50 of the second part 44 is connected to a load 56.

Reference will now be made to Figure 3 which shows an enlarged view of the first part 42 of the mast head amplifier 30 in order to explain the operation of the mast head amplifier.

The case of a received signal Rx from the antenna via common feed 34 will now be considered. The received signal Rx is received at port a of the first hybrid 46. The received signal Rx splits up to pass through to port c and to port d of that hybrid. The relative phase of the received signal Rx at port c has been shifted by 90^{o} whilst the relative phase of the signal at port d has been shifted by 180^{o}. The split receive signal passes through respective band pass filters 48a and 48b without any relative phase change.

The signal from band pass filter 48a can pass through the hybrid 50 to port g and port h. At port g the total relative phase shift of the received signal will be 90^{o} (from passing through the first hybrid 46) + 90^{o} (from passing through the second hybrid) i.e. a total shift of 180^{o}. Similarly at port h the relative phase of the received signal will be shifted by 90^{o} + 180^{o} i.e. a total shift of 270^{o}.

Now consider the signal from the second band pass filter 48b. As with the signal passed through the first band pass filter 48a, the signal can pass to port g and port h. At port h, the receive signal will be shifted by 180^{o} + 180^{o} i.e. a total relative phase shift of 360^{o} whilst at port h, the received signal will be shifted by 180^{o} + 90^{o} i.e. a total relative phase shift of 360^{o}.

Thus at port g there will be two signals, the first being the receive signal relatively shifted by 180^{o} and the second being the receive signal relatively shifted by 360^{o}. As the two signals are in anti-phase, the signals cancel and accordingly no power will flow from port a of the first hybrid to port g of the second hybrid.

At port h, there will be two signals, the first being the receive signal shifted by 270^{o}, passing from port a via the first band pass filter 48a, and the second being the receive signal shifted by 270^{o}, passing from port a via the second band pass filter 48b. The two signals are in phase so that all power (less the losses suffered by the receive signal as it passes through the hybrids 46 and 50 and the band pass filters 48) flows from port a of the first hybrid 46 to port h of the second hybrid 50.

The receive signal Rx from port h of the second hybrid 50 of the first port is then amplified by the low noise amplifier 54. The receive signal is then passed to port g of the second hybrid of the second part 44. The second part 44 operates in exactly the same way as the first part so that all the power (less the losses suffered by the amplified receive signal as it passes through the hybrids 46 and 50 and the band pass filters) of the receive signal passes to port b of the first hybrid 46 of the second part and no power flows to port a of that first hybrid.

The case of the transmit signal Tx fed from the base station via common feed 32 will now be considered. The signal Tx is received at port b of the first hybrid 46 of the second part. The signal splits and passes through that hybrid 46 to ports c and d. The two parts of the transmit signal Tx are each reflected by the respective band pass filters 48a and b. The signals are both reflected to ports a and b of the first hybrid 42. The two signals which pass from port b to port a of the hybrid both have a relative phase shift of 270^{o}. The two signals which are reflected from the filters back to port b have respective relative phase shifts of 180^{o} and 360^{o}. These signals would be in anti-phase so that there is no power flow back to port b. Thus all power will pass from port b to port a, less any losses suffered as the signals pass through the hybrid. The transmit signal Tx passes through the first hybrid of the first part 42 in the same way as through the second part 44, with the transmit signal being reflected by the first and second band pass filters 48a and b.

As the transmit signal does not have to pass through any filters unlike the prior art where the transmit signal Tx has to pass through two band pass filters, the power loss in the transmit signal resulting from travelling from the base station to the antenna is reduced significantly. Typically the prior art arrangement would result in a loss of 1.0 to 1.2dB. However embodiments of the present invention are able to reduce the losses to less than 0.5dB, typically .3 to 0.4dB.

Additionally, for those transmit signals Tx which pass through the first and second band pass filters 48a and b of the first part 42, all of the power from port b of the first hybrid 46 would flow to port g of the second hybrid 50. This is for the same reasons that all of the power of the receive signal Rx flows from port a of the first hybrid to port h of the second hybrid. Thus any transmit signal passing through the band pass filters 48 will be dissipated or attenuated by load 52. If the transmit signal were to pass directly to the input of the low noise amplifier, the amplifier could become desensitised or saturated. There may be some reflection of the transmit signal from the load 52. However, by the time that the reflected transmit signal reaches the low noise amplifier 56, the transmit signal has been sufficiently attenuated so that the low noise amplifier is not damaged or impaired by the transmit signal.

Whilst it is in theory possible for the transmit signal to pass from port b of the first hybrid of the second part to port g of the second hybrid, the transmit signal Tx would be at the output side of the amplifier.

The particular configuration of this embodiment also therefore has the advantage that good isolation of the receive Rx and transmit Tx signals is achieved with any unwanted transmit signals Tx being dissipated or attenuated by load 52. Additionally, the required isolation can be achieved in embodiments of the invention with around 30% less components that which would be required with the prior art arrangement.

For example the number of resonators present in the filters in embodiments of the present invention can be reduced as compared to the filters of the known arrangement. Typically an isolation greater than 80 to 90 dB can be achieved between the received and transmit signals.

A load 56 is arranged to dissipate or attenuate any stray signals which pass from port a of the first hybrid 46 of the second part 44 to port h of the second hybrid. These can be stray signals may be transmit or receive signals.

Another advantage of embodiments of the present invention is that only one type of filter is required i.e. band passfilters tuned to the receive signals frequency band. This contrasts with the known arrangement which requires two different types of filter: band pass filters tuned to the receive signal frequency band; and band pass filters tuned to the transmit signal frequency band. By reducing the number of different types of filter required, the manufacturing cost can be reduced.

This embodiment may be modified so as to include an amplifier, filter and/or antenna monitoring equipment between the first hybrids 46 of the first and second arrangement. For example, a VSWR meter (voltage source wave ratio meter) may be present. This checks for reflected power from the antenna. If the reflected power exceeds a predetermined threshold, it can be determined that the antenna is no longer present.

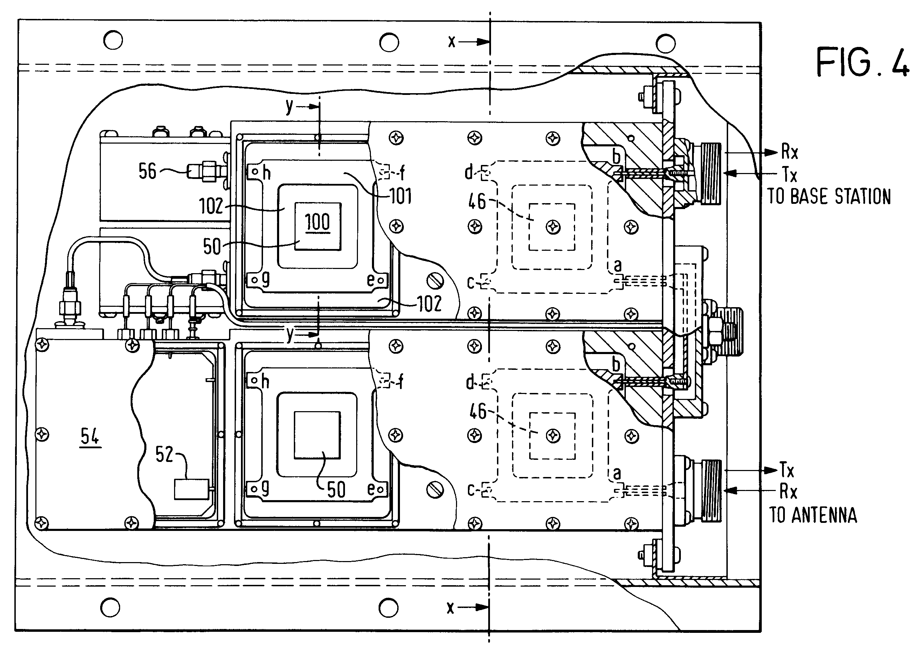

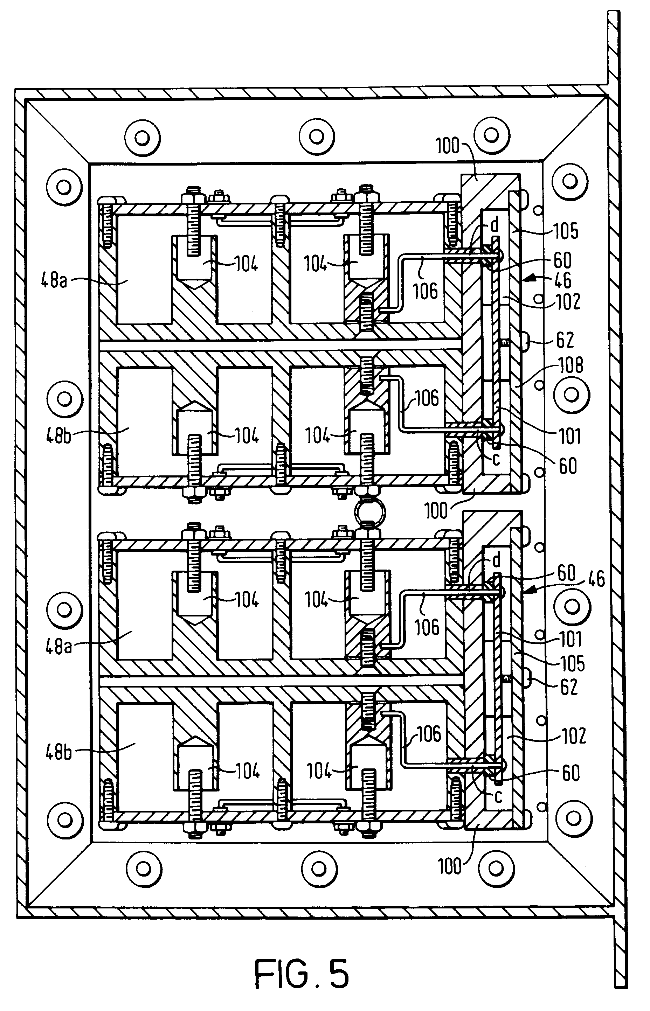

Figures 4 and 5 shows one actual construction for the first embodiment. Like parts are indicated by the same reference numerals. Figure 4 is a first section through the mast head amplifier whilst Figure 5 is a cross-section taken along line X-X of Figure 4. The layout of the various components can be seen from these figures. As will be appreciated, all four of the hybrids shown are coaxial couplers and have the same construction. As can be seen particularly clearly from the hybrids 50 of Figure 4, which are shown in cross-section, area 100 of the hybrid is of aluminium whilst areas 102 are in the form of airgaps i.e. air acts as the dielectric material. Area 101 is copper or copper-plated. Other dielectric materials can be used instead of air. Likewise other conductive materials can be used instead of aluminium and copper.

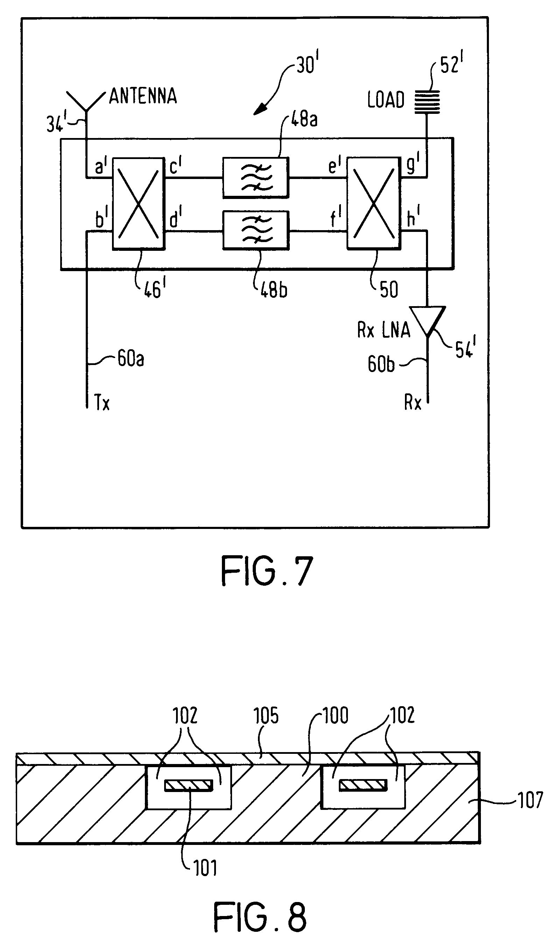

Figure 8 shows a cross-section along line y-y of hybrid 50 of Figure 4. Like parts are indicated by like reference numerals. The position of the copper material 101 relative to the air gaps 102 can be clearly seen. A lid 105 of conductive material is provided over the hybrid. Aluminium material 100, 107 also surrounds, on three sides, the air gaps 102.

The filters 48a and b, as can be clearly seen from Figure 5, lie in a plane below that containing all four hybrids and the low noise amplifier. Each filter is made up of 10 resonators 104 only two of which are shown for each filter in Figure 5.

One important aspect of embodiments of the invention relates to the connections made between the hybrids and the filters. Conventionally, connections between a hybrid and a filter would be made using connectors and a length of coaxial wire or the like.

The connectors would be used to connect the respective ends of the coaxial cable or wire to the respective components. However, the inventors have appreciated that this conventional arrangement will cause undesirable loss in, for example, the transmit signal. To overcome this problem, the embodiments of the present invention are arranged so that there is a direct connection between the hybrids and the filters. One form of this direct connection is shown in Figure 5. In particular, direct feeds 106 in the form of coaxial wires connect the filters and hybrid. The first ends of the direct feeds 106, feed directly into the first resonators of the filter 48a and b. The hybrids are mounted in a housing 108 which is mounted against the filters 48a and b. The other ends of the direct feeds are directly connected to the respective ports c and d of the hybrid 46 without the need for connectors. In other words, direct electrical connection is made between the end regions of the direct feed and the hybrid port and the resonator respectively. There are no intermediate components between the ends of the direct feed and the hybrid or resonator respectively at the regions where electrical contact is made respectively between the ends of the direct feed and the hybrid and resonators. Thus embodiments of the invention do not require any connectors to electrically connect the hybrids to the filters. All that is required is a short length of coaxial wire, the length of which is minimised due to the relative positioning of the hybrids 46 and filters 48a and b. The optimum length of wire can be determined by trial and error but is generally relatively short. Thus, the signal losses resulting from the connection of the hybrids to the filters is minimised. Conventional means may be used to keep the direct feed connections in place.

The support of the hybrids against the filters can be seen from Figure 5. PTFE spacers 60 are provided between the copper area 101 of the hybrids 46 and the surrounding aluminium wall 107. The spacers 60 are arranged to surround part of the direct feeds 106. It should be noted that the ports of the hybrid are on the copper portion 101. A nylon screw 62 may be provided which passes through the cover 105 of the hybrid and rests against copper portion 101. The spacers 60 and screw 62 help to maintain the position of the copper portion in the surrounding air areas 102. The screws 62 and spacers 60 can also be made of any other suitable non-conductive material.

In the arrangement shown in Figures 4 and 5, the hybrids are mounted against the sides of the filters 48a and b and the direct feeds 106 enter the filters 48a and 48b via the sides thereof.

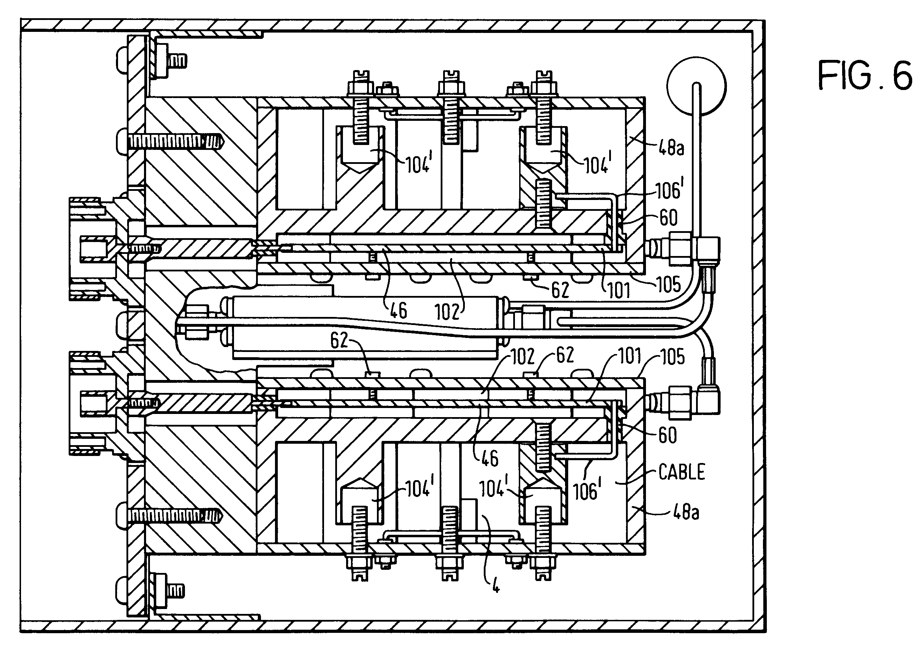

Figure 6 shows a second actual construction for the first embodiment. The first arrangement is particularly suited to those applications which require a relatively wide bandwidth. The arrangement shown in Figure 6 is particularly suited to those applications which require a narrower bandwidth and hence a fewer number of resonators 104'. In particular, in embodiments of the present invention, each filter 48a, 48b comprises four resonators. The arrangement shown in Figure 6 only shows the filters 48a of each arrangement. The arrangement shown in Figure 6 differs from that shown in the previous two Figures in that each hybrid 46 together with filters 48a and 48b are integrated into a single unit. Thus, a separate housing for the hybrids are not required as one wall of the filters provides a common wall for also housing the hybrid. In particular, part of the aluminium wall 105 of the hybrid is formed by one of the walls of the filter 48a. The connection between the filter and the hybrid is made in exactly the same way as in the arrangement shown in Figures 4 and 5. However, the base of the hybrid is mounted against the base of the filters as opposed to the side wall thereof. The direct feeds 106' therefore pass through the bases of the filters. By integrating the filters and hybrid into a single device, the length of cable or wire required to form the direct feeds can be minimized. Spacers 60 and screws 62 may be provided as described in relation to Figures 4 and 5.

Whilst the arrangements of Figures 4 and 5, and 6 show the direct connection between hybrids 46 and the filters using a direct feed, it will be appreciated that the direct feed can also be provided between hybrids 50 and the filters 48a and b.

Reference will now be made to a second embodiment of the present invention with reference to Figure 7.

The embodiment shown in Figures 2 to 6 is concerned with providing single feeder cables to the antenna and base station from the mast head amplifier. In contrast, in the embodiment shown in Figure 7, a dual feeder cable 60a and 60b is used between the mast head amplifier 30' and the base station. In other words a cable is provided for the receive signals and a cable is provided for the transmit signals. A common feed 34' is used between the mast head amplifier 30' and the antenna. The mast head amplifier consists only of the first part of the mast head amplifier 30 of the first embodiment and operates in exactly the same way.

Thus, the power of the receive signals Rx flows from port a' of the first hybrid 46' to port h' of the second hybrid 50'. No receive signal power flows from port a' of the first hybrid 46' to port g' of the second hybrid 50'. The receive signal Rx is amplified by the low noise amplifier 54' and the amplified receive signal Rx is then passed directly to the base station via cable 60b for processing.

The transmit signal Tx, in contrast, passes from the base station to the mast head amplifier 30' via cable 60a. The transmit signal passes from port b' of the first hybrid 46' to port a', being reflected at the band pass filters 48a' and 48b'. The transmit signal is then passed from port a of the first hybrid 46' to the antenna via common feed 34'. Any stray transmit signals Tx passing through the band pass filters 48a' and 48b' are dissipated by load 52', as with the first embodiment.

Similar advantages to those achieved by the first embodiment may of course also be achieved by the second embodiment.

All of the embodiments of the present invention may be arranged so as to be relatively compact. The known arrangements tend to have a relatively large flat surface and be relatively thin, which, when mounted on a mast head can cause problems in windy conditions. In contrast, embodiments of the invention are squarer and are thicker but the largest surface areas are much smaller than those of the known arrangement. This reduces the problems which the prior art arrangement experience in windy conditions.

Whilst the embodiments of the present invention described are concerned with mast head amplifiers for use in telecommunication networks, it will be appreciated that embodiments of the present invention have applications to any communication system using antennae which are required both to receive and to transmit signals. Additionally, the embodiments described above, may be modified so that the filters reflect the receive signals and allow the transmit signals to pass therethrough.

It will also be appreciated that embodiments of the present invention are able to deal both with broadband and narrowband signals.

Whilst the embodiments of the invention have been described as using coaxial hybrids, there may be embodiments in which waveguide or substrate hybrids may be used.

## Claims

1. A mast head telecommunication device for passing transmit signals from a base station to an antenna and for passing receive signals from the antenna to the base station, said transmit signals being in a first frequency band and said receive signals being in a second, different, frequency band, said mast head device comprising an arrangement having;
a hybrid, a first port of which receives the transmit signals and a second port of which receives the receive signals; and
frequency selective means connected to other ports of said hybrid and operable to pass therethrough signals received from the hybrid having a frequency in the said second band and to reflect signals received from the hybrid that have a frequency in the said first band.

2. A mast head device as claimed in claim 1, wherein in said arrangement said second port of the hybrid is connected to said antenna and the reflected transmit signals are reflected to said second port.

3. A mast head device as claimed in claim 1 or 2, further comprising in said arrangement a second hybrid connected to an output of the frequency selective means, said first hybrid being connected to an input of the frequency selective means.

4. A mast head device as claimed in claim 3, wherein said first and second hybrids are arranged such that the receive signals received at said second port of the first hybrid are passed to a first port of said second hybrid.

5. A mast head device as claimed in claim 4, wherein said arrangement further comprises a low noise amplifier and the said first port of said second hybrid is connected to an input of the low noise amplifier.

6. A mast head device as claimed in claim 4 or 5, wherein any transmit signals passed through said frequency selective means are passed to a second port of said second hybrid and a load is connected to said second port whereby the power of any transmit signals passed through said frequency selective means is dissipated or attenuated by said load.

7. A mast device as claimed in any preceding claim, wherein the or each hybrid is a half power coupler having a coaxial construction.

8. A mast head device as claimed in any preceding claim, wherein the or each hybrid comprises four ports and a signal fed from a single port emerges from two opposite ports, adjacent one another, with a phase shift of 90^{o} therebetween.

9. A mast head device as claimed in any preceding claim, wherein said frequency selective means comprises a filter.

10. A mast head device as claimed in claim 9, wherein said filter comprises a band pass filter.

11. A mast head device as claimed in claim 9 or 10, wherein said frequency selective means comprises two filters, the input of one filter being connected to a first of said other ports of the first hybrid and the input of the second filter being connected to a second of the other ports of said first hybrid.

12. A mast head device as claimed in any preceding claim, wherein frequency selective means is connected directly to said first hybrid by a direct feed.

13. A mast head device as claimed in claim 12 wherein said first hybrid and the frequency selective means are formed as an integral device.

14. A mast head device as claimed in claim 12, wherein the first hybrid is mounted against the frequency selective means, in close proximity thereto.

15. A mast head device comprising two of said arrangements as defined in any preceding claim, said arrangements being arranged back to back.

16. A mast head device as claimed in claim 15, wherein the transmit signal is received at said one port of said first hybrid of said second arrangement, reflected by said frequency selective means to said second port of said first hybrid of the second arrangement, passed to said one port of the first hybrid of the first arrangement, reflected by the frequency selective means and output at said second port of said first hybrid of the first arrangement and passed to said antenna.

17. A mast head device as claimed in claim 16, wherein an amplifier, frequency selective means and/or means for detecting the presence of the antenna are provided between the second port of the first hybrid of the second arrangement and the first port of the first hybrid of the first arrangement.

18. A mast head device as claimed in claim 15, 16 or 17, wherein the received signals from the antenna are input to said second port of said first hybrid of said first arrangement and output at said first port of said second hybrid of the first arrangement, said received signal then being received at a port of said second hybrid of said second arrangement and being passed to said first port of the first hybrid of the second arrangement.

19. A mast head device as claimed in claim 18, wherein a low noise amplifier is provided between the output of the first arrangement and the port of the second hybrid of the second arrangement for the receive signals.

20. A method of passing transmit signals from a base station to an antenna and for passing receive signals from the antenna to the base station, said transmit signals being in a first frequency band and said receive signals being in a second different frequency band, said method comprising the steps of:
inputting transmit signals to a first port of a hybrid;
inputting receive signals to a second port of said hybrid;
passing signals having a frequency in said second band, received from said hybrid, through frequency selective means; and
reflecting signals having a frequency in said first band, received from said hybrid, from said frequency selective means.
